# EUROPÄISCHE PATENTSCHRIFT

(11) **EP 1 160 307 B1**
(45) Veröffentlichungstag und Bekanntmachung des Hinweises auf die Patenterteilung: **05.09.2007**
(21) Anmeldenummer: 01112650.5
(22) Anmeldetag: 25.05.2001
(51) Int. Cl.: C10J 3/06, C10B 7/10, C10B 47/44, C10B 53/00, C10B 53/02

(54) **Verfahren und Vorrichtung zur thermischen Behandlung und chemischen Umsetzung von Natur- und Synthesestoffen unter Zeugen eines Produktgases zur weiteren Verwendung**
Process and apparatus for thermal treatment and chemical conversion of natural or synthetic materials to a product gas
Procédé et installation pour le traitement thermique et pour la conversion chimique de matériaux naturels ou synthétiques en gaz

(30) Priorität: 26.05.2000 DE 10025916
(43) Veröffentlichungstag der Anmeldung: 05.12.2001
(73) Patentinhaber: Kunststoff- und Umwelttechnik GmbH, 03149 Forst (DE)
(72) Erfinder: Unger, Reinhard, Dr., 03149 Forst (Lausitz) (DE)
(74) Vertreter: Haschick, Gerald

(56) Entgegenhaltungen:
- GB-A- 291 962
- US-A- 1 538 796
- US-A- 1 972 929
- US-A- 5 296 005

## Beschreibung

Ziel der Erfindung ist es, ein Verfahren und eine Vorrichtung zur thermischen Behandlung und chemischen Umsetzung von Natur- und Synthesestoffen unter Zeugung eines Produktgases zur weiteren Verwendung zu finden, wobei eine Verschwelung von Reststoffen aus der Papier-, Land- und Forstwirtschaft durchgeführt wird und das entstehende Produktgas zur weiteren stofflichen bzw. energetischen Nutzung zur Verfügung stehen soll.

Die bekannten Verfahren der Pyrolyse gehen davon aus, dass die Rest- und Abfallstoffe, wie zum Beispiel Spuckstoffe, Kunststoffe, Gummi, Holz usw., durch eine Pyrolysereaktion bei einer hohen Temperatur und bei Normaldruck oder leichtem Über- oder Unterdruck zu einer Zersetzung der molekularen Strukturen und zur Gasbildung führt. Dabei werden bekanntermaßen auch die für andere Verfahren, wie z. B. Verbrennungsverfahren, verwendeten Zuschlagstoffe eingesetzt, wie zum Beispiel CaO, CaOH usw., um die Säurebildner, die bei der Zersetzung entstehen, zu neutralisieren. Die entstehenden Gase werden in Nachreinigungsstufen gereinigt, wobei in der Regel eine Gaswäsche zur Anwendung kommt. Die bekannten Verfahren weisen Merkmale auf, die vielfältig Eingang in technische Verfahren gefunden haben.

Der Schwelprozess der oben genannten Stoffe setzt jedoch im Pyrolyseapparat Produkte mit Eigenschaften frei, die bei Anwendung der konventionellen Verfahren die Ausrüstungen funktionsuntüchtig machen, so dass diese Verfahren nicht anwendbar sind. Es bilden sich Zersetzungsprodukte, die an Oberflächen und Ausrüstungsteilen Kondensate bilden und nach längerer Betriebsdauer feste Ablagerungen hervorrufen, die den Prozess behindern, was als Nachteil auszuweisen ist.

Durch die eingetragenen, im Pyrolyseapparat freiwerdenden Wasserdampfmengen werden Wärmemengen abgeführt, die bei den im konventionellen Pyrolyseapparat entstehenden Materialanhäufungen erhebliche Temperaturunterschiede im Material verursachen, so dass die gewünschte Pyrolysereaktion nicht homogen stattfindet und nur von der Oberfläche der Materialanhäufungen Pyrolysegase abgegeben werden können, da die Wärmeübertragung durch Wärmeleitung nicht ausreicht und dadurch eine Begrenzung der chemischen Umsetzung und des Stoffüberganges durch den zu geringen Wärmeübergang eintritt. Demgegenüber führt die Tatsache, dass ein Anteil flüchtiger Produkte, die der oberflächennahen Diffusionsschicht bereits bei geringen Temperaturen entweichen, zu einer Verarmung des Gasgemisches, so dass die Reaktion nach dem Zerfall der Synthesestoffe zur Bildung eines Produktgases unter nicht optimalen Gleichgewichtsbedingungen stattfindet. Die Gaszusammensetzung ist durch einen hohen CO₂-Anteil gekennzeichnet und damit nicht optimal. Die Reaktionsgeschwindigkeit erreicht nicht die erforderliche Größenordnung.

Andere Verfahren, die sehr häufig angewandt werden, schließen diese Nachteile dadurch aus, dass Partikel bis zu einer Größe von 3 mm häufig in Anwesenheit von unterstöchiometrisch zugeführten Luftmengen in einen Reaktionsraum eingeblasen werden und durch eine die Vergasung auslösende Verbrennungsreaktion eine Verkohlung und Aufheizung der Oberflächen erfahren, die ausreicht, die sich anschließende Vergasungsreaktion bei ausreichenden Temperaturen in Gang zu halten. Durch diese Verfahrensweise entsteht trotz hohen apparativen Aufwandes ein Armgas von höherer Temperatur, das nur in mehreren Verfahrensstufen energetisch genutzt werden kann und in bezug auf unvermeidliche Verunreinigungen Probleme der Gasreinigung aufwirft, die jedoch bei den üblicherweise wirtschaftlich geforderten anspruchsvollen stoffwirtschaftlichen und energetischen Verfahren der weiteren Nutzung, Verwertung und Veredlung der Gase gelöst werden müssen.

Häufig werden mit den Verfahren der Vergasung wirtschaftliche Prozesse in Verbindung gebracht, die an sich bekannt sind und nicht zwingend in Zusammenhang mit der Aufbereitung von Synthesestoffen zu einem verwertbaren Gas zu bringen sind, sondern im Gegenteil, nach dem Stand der Technik für die Verwertung nicht das Optimum darstellen. Somit stellen sich aus den diesseitig genannten technischen Lösungen Nachteile dar, die durch die erfinderische Lösung beseitigt werden.

Ziel der Erfindung ist es, ein Verfahren und eine dementsprechende Vorrichtung zur thermischen Behandlung und chemischen Umsetzung von Natur- und Synthesestoffen unter Zeugung eines Produktgases zur weiteren Nutzung und Verwendung mit hoher Qualität und mit geringem technologischen Aufwand zu realisieren.

Aufgabe der Erfindung ist es, ein Verfahren und eine Vorrichtung zur thermischen Behandlung und chemischen Umsetzung von Natur- und Synthesestoffen unter Zeugung eines Produktgases zur weiteren Verwendung zu realisieren, wobei in einem Schwelprozess ein Produktgas erzeugt wird, welches den Ansprüchen der weiteren stoffwirtschaftlichen und energiewirtschaftlichen Verfahrensschritte genügt.

Die Aufgabe wird erfindungsgemäß dadurch gelöst, dass ein Verfahren und eine Vorrichtung zur thermischen Behandlung und chemischen Umsetzung von Natur- und Synthesestoffen unter Zeugung eines Produktgases zur weiteren Verarbeitung realisiert wird, wobei das Verfahren und entsprechende Vorrichtungsmerkmale entsprechend der ausgeführten Beschreibung verbunden werden. Zum Einsatz kommt ein wasserhaltiger Eingangsstoff, mit dem eine Mischung in der oberen Schwelkammer unter Hinzuführung des Zwischenproduktes hergestellt wird. Es wird ein Zwischenprodukt durch eine Gleichgewichtsreaktion in der Hochtemperaturkammer in Anwesenheit des vorhandenen Zwischenproduktes, der Mischung und des Produktgases hergestellt. Das Zwischenprodukt wird bestimmten Bedingungen unterworfen, muß in einem bidirektionalen Stoffstrom geleitet werden und ist damit Wärmeträger für die obere Mischkammer und die Komponenten in der Hochtemperaturkammer. In dem Prozess werden dadurch die Bedingungen verfahrensgemäß eingestellt, für die Reaktion in der Mischung, für die Gleichgewichtsreaktion in der Hochtemperaturkammer, zwischen Mischung, Zwischenprodukt und Gas und für die Eigenschaften des Zwischenproduktes in der zweiten weiterführenden Direktion der Bildung der Produkte.

Als erster verfahrensmäßiger Schritt wird eine Mischung aus dem vorhandenen Zwischenprodukt und dem wasserhaltigen Eingangsstoff bei einer Temperatur > 300 °C verarbeitet, so dass in der entstehenden Mischung die Pyrolysereaktion stattfindet.

Das Mischungsverhältnis in der Reaktionszone aus dem Eingangsstoff und dem Zwischenprodukt beträgt zwischen 1 : 1 bis 1 : 5.

Dabei handelt es sich bei dem Zwischenprodukt um einen Stoff, der in der Hochtemperaturzone hergestellt wird.

Der als Zwischenprodukt bezeichnete Stoff besteht aus:
- den Monomeren der eingesetzten Kunststoffe und deren Derivaten (langkettige Aliphate, Olefine, Styrol, Vinylchlorid) und bei Natur- und Synthesestoffen aus Teilen der Zellulosematrix, Furanverbindungen,
- Oligomere der vorgenannten Stoffe bis zu 50 %, teilweise gecrackte Polymere im Bereich C6-C₃₅,
- reinem Kohlenstoff,
- öl- und teerhaltigen Kondensaten (Aliphate und Olefine) mit einem Siedepunkt oberhalb 200 °C.

Das Zwischenprodukt enthält verfahrensgemäß mindestens das Zehnfache an ungesättigten Endgruppen des Eingangsproduktes. Die Mischung aus dem vorhandenen Zwischenprodukt und dem wasserhaltigen Eingangsstoff wird nach einem weiteren Verfahrensschritt einer Hochtemperaturbehandlung zugeführt, wodurch aus der Mischung und dem Zwischenproduktstrom in der vorhandenen Vorrichtung Zwischenprodukt ständig nachgebildet wird und gemäß Beschreibung eines weiteren Verfahrensanspruches in bidirektionaler Führung wiederum in die Mischung mit Eingangsstoff in den Verfahrensabschnitt geleitet wird, der im ersten Verfahrensabschnitt beschrieben ist. Dieses vorhandene Zwischenprodukt in der Hochtemperaturbehandlung wird bei zusätzlicher Gaszufuhr aus anderen Reaktionszonen durch Wärmezufuhr bei einer Temperatur von 700 bis 1000 °C hergestellt. Entsprechend den weiteren Verfahrensansprüchen wird er ferner in die nachgeschalteten Verfahrensabschnitte geleitet, in denen die Gase CH₄, C₂H₆, C₃H₆, C₆H₆, C₆H₁₂ u. a. entstehen, teilweise in den Zwischenproduktstrom geleitet und ferner abgeleitet werden. Der Zwischenproduktstrom des Zwischenproduktes wird bidirektional aus der Mischung der Reaktionszone und dem Material des Austragsbereiches der Zwischenproduktherstellung gebildet.

Die bidirektionale Leitung des Zwischenproduktstromes erfolgt intermetierend, so dass der bidirektionale Stoffstrom des Zwischenproduktes bzw. der Mischung aus dem Produktgemisch mit dem Zwischenprodukt mit einer Frequenz > 10 s⁻¹ in seiner Richtung umgekehrt wird und durch Umkehrung der Richtung des Zwischenproduktstromes dieser in den ersten Verfahrensabschnitt und abwechselnd den folgenden Verfahrensabschnitten zugeleitet wird.

Unter dem bidirektionalen Austausch des Stoffstromes des Zwischenproduktes bzw. der Mischung aus dem Eingangsstoff und dem Zwischenprodukt ist folgendes zu verstehen:

Der oben genannte Zwischenproduktstrom der in der Hochtemperaturzone hergestellt wird, wird intermetierend in die obere Mischkammer (2) und in den Produktaustritt (C1 und C2) mit einer innenliegenden Transportschnecke geführt. Durch die Aufenthaltszeit in der Hochtemperaturkammer (4) geschieht die Bildung des Zwischenproduktstromes. In der ersten Direktion geschieht infolge der hohen spezifischen Wärmekapazität des Zwischenproduktstromes die Wärmezufuhr in die Produktmischung der oberen Mischkammer. In zweiter Direktion wird die Produktmischung zur Bildung des Zwischenproduktstromes in der Hochtemperaturzone und das in der Hochtemperaturzone vorhandene Zwischenprodukt teilweise in die nachgeschalteten Verfahrensschritte über den Produktaustritt (C1 und C2) geleitet. Durch die erste und zweite Direktion ist die bidirektionale Führung gewährt.

Die einzelnen Verfahrensschritte werden nachfolgend wie folgt genau beschrieben:

Ein Zwischenstoffstrom wird bidirektional als beweglicher Wärmeträger in den Reaktionszonen geführt. Dabei wird ein Mischungsverhältnis von 1 : 1 bis 1 : 5 zwischen dem Eingangsproduktstrom und dem Zwischenproduktstrom hergestellt. Ein Problem der Zersetzung von Natur- und Synthesestoffen ist die gezielte Wärmeeintragung in den wasserhaltigen Eingangsstoff. Diese Wärmezufuhr erfolgt durch das hochtemperierte Zwischenprodukt, das mit diesem abgemischt wird. Das Zwischenprodukt ist somit der Wärmeträger in der Mischung. Unter Einfluß von Produktgasen bilden sich aus den Partikeln durch eine physikalisch haftende Verbindung Pellets mit einer Größe bis 150 mm. Die Pellets bestehen aus Synthesestoffen und aus mehr als 10 % chemisch gecrackten Zelluloseanteilen und besitzen an der Oberfläche kokshaltige Anhaftungen. Die Mischung wird als pulsierender Stoffstrom mit einer Dichte kleiner 600 kg/m³ und einer definierten Verweilzeit bis zu 30 min in einer stoßenden Schicht mit Druckimpulsen von kleiner 5 kPa auf eine Temperatur größer 300 °C gebracht. Dabei wirken auf die gebildeten Pellets im Zwischenstoffstrom die entstandenen Produktgase. Der bidirektional gerichtete Stoffstrom gelangt in die Hochtemperaturzone, in der aus den Partikeln in oben genannter Zusammensetzung ein Zwischenprodukt gebildet wird, das eine Dichte kleiner 600 kg/m³ und ein Verhältnis von Wasserstoff zu Kohlenstoff größer 1,5 : 1 aufweist. Der hohe Wasseranteil, der mit den Pellets in der Hochtemperaturzone eingeleitet wird, entweicht hier bis zum Erreichen einer Oberflächentemperatur der Pellets von 600 °C.

Die phenolfreie Gasmischung enthält Aromaten, die durch den Partialdruck des Wasserdampfes in der Hochtemperaturzone von größer 0,01 bar (absolut) mit dem Gasstrom abgeleitet werden. Dadurch wird die Siedetemperatur von organischen Zersetzungsprodukten, die in den Gasstrom gelangen, herabgesetzt, so dass eine Kondensation aus dem Gas heraus extrem erschwert wird. Durch die Pulsation mit einer Frequenz größer 10 sek⁻¹, mit der der Zwischenproduktstrom durch die Hochtemperaturzone in bidirektionaler Stoffstromführung geleitet wird, wird erreicht, dass bei einer Oberflächentemperatur in der Hochtemperaturzone bis zu 1000 °C der Gasanteil im Zwischenproduktstrom sehr hoch ist, so dass Reaktionsbedingungen bewirkt werden können, bei denen ein hochkalorisches Gas entsteht.

Der bidirektional geführte Zwischenstoffstrom gelangt aus dem unteren Teil der Hochtemperaturzone teilweise in die Nachreaktionszone, nachdem die Zwischenprodukteigenschaften durch eine Spaltung der Kettenlängen der Synthesestoffe in Ketten mit weniger als 30 Monomereneinheiten in Anwesenheit von Kohlenstoff und Produktgas bei einer Verweilzeit von kleiner 30 min und einer instationären Prozessführung gebracht werden. In den Stoffstrom der Nachreaktionszone werden flüssige Reaktionsprodukte unter anderem aus der Gasaufbereitung an den Pellets kondensiert und mit einem Anteil kleiner 5 % in der Nachreaktion einbezogen. Der Koksanteil beträgt in dieser Zone bis zu 20 %. Das Produktgas wird sowohl aus der Hochtemperaturzone als auch aus der Zone, in der das Eingangsprodukt mit dem Zwischenprodukt gemischt wird, in die Nachreaktionszone eingeleitet und bei Verdampfung der flüchtigen Bestandteile des hier befindlichen Reaktionsproduktes bei einem Druck von mehr als 2 kPa auf eine Temperatur kleiner 800 °c gebracht. Die Verweilzeit des Gases bis zum Austritt aus der Nachreaktionszone beträgt infolge der Gestaltung der Vorrichtungsausführung mehr als 4 sek, um die Gasreaktion optional ablaufen zu lassen.

Der Zwischenproduktstrom aus Synthesestoffen, gemischt mit mineralischen Beimengungen und Kohlenstoff mit einem Kohlenstoffanteil 15 % bis 75 % und einem Wasseranteil 1 % bis 10 %, bildet ein Reaktionsgemisch, das als beweglicher Wärmeträger dient, der einen Anteil flüssiger Kohlenwasserstoffe bindet, in bidirektional gerichteter Stoffströmung eine Mischung mit dem Eingangsproduktstrom, andererseits eine Mischung mit eingetragenen Koks- und Kondensatmengen und mineralischen Stoffen bildet.

Die Mischung aus Zwischenprodukt und Eingangsprodukt entsteht in einer bidirektional gerichteten Stoffströmung als stoßende Schicht mit einer vergleichsweise niedrigen Temperatur größer 400 °C durch eine radiale Zirkulation und durch die Beimengung von Pellets mit einer Oberfläche als Mischung mit einer Dichte kleiner 600 kg/m³ infolge der Druckpulsation.

Die Hochtemperaturzone und die Nachreaktionszone werden durch Verbrennen von Produktgas auf eine Oberflächentemperatur von bis zu 1000 °C gebracht, wobei das Brenngas in einen Brennraum eingeleitet wird, der die Hochtemperaturzone zylindrisch umschließt.

Durch die Zuführung von Gas und Luft oder Sauerstoff in eine zentral in der Hochtemperaturzone und in der Nachreaktionszone angeordneten Zuführungseinrichtung wird an der Oberfläche dieser Einrichtung eine Temperatur eingestellt, so dass die flüssigen Zerfallprodukte aus der Pyrolyse eine Temperatur größer 600 °C erreichen. Dabei bilden sich Gase, die anschließend die Gleichgewichtsreaktionen in der stoßenden Schicht der Mischzone beeinflussen.

Zum Verständnis des in der Darlegung des Wesens der Erfindung beschriebenen Verfahrens wurde die Abweichung vom Pyrolyseverfahren wie folgt beschrieben:

Beim Pyrolyseverfahren entsteht in einer Gleichgewichtsreaktion ein Gemisch aus Reaktanten und Reaktionsprodukten. Um die Reaktion entsprechend des gewünschten Reaktionsfortschrittes voranzutreiben, werden Reaktionsprodukte entfernt und Reaktanten, wie zum Beispiel Kohlenwasserstoffe, Wasser usw., hinzugefügt.

Ein wesentliches Merkmal der verschiedenen Pyrolyseverfahren ist die Zuführung von Sauerstoff (Luft) für die Erzeugung von Wärme bzw. Abwesenheit von Sauerstoff und die Wärmezufuhr von außen. Im ersten Fall entsteht ein Armgas mit höherem Kohlendioxidanteil und Stickstoff. In dem beschriebenen Verfahren entsteht ein hochkalorisches Gas, bei dem unabhängig davon ein Koksanteil ausgetragen, aber auch durch eine Konvertierung nach dem Stand der Technik eingesetzt werden kann.

In der Erfindung wird nicht die Tatsache beschrieben, dass eine Konvertierung vollständig abgeschlossen oder vorzeitig abgebrochen wird, sondern dass die eingesetzten Natur- und Synthesestoffe "verschwelt" werden. Wir hatten hierzu den Ausdruck Vergasung eingeführt, da diese Stoffe durch den Schwelprozess vergast werden. Wir weisen daraufhin, dass es sich ausdrücklich um keine Vergasung von Kohle handelt, sondern in einem Vergasungsprozess über die beschriebenen Verfahrensschritte die Herstellung des Zwischenproduktes stattfindet, mit dem eine bestimmte Gasqualität erzielt werden kann.

Die unter den Verfahrensansprüchen dargestellte technische Lehre beinhaltet die Herstellung einer Mischung aus einem Eingangsstoff, dem beschriebenen Zwischenprodukt und die Herstellung des Zwischenproduktstromes, wobei dessen Führung mehreren Reaktionsschritten unterworfen wird.
1. Zersetzung/Mischung
2. Zersetzung/Cracken
3. Herstellung Zwischenprodukt in Gleichgewichtsreaktion
4. Vergasung in Gasreaktion als Gleichgewichtsreaktion zur Bildung bestimmter Reaktionsprodukte, z. B. Gase

Diese Reaktionen, Aufspaltung der Natur- und Synthesestoffe zur Herstellung des Zwischenproduktstromes mit bestimmten Temperaturen in mehreren Schritten und die anschließende Gasreaktion als Gleichgewichtsreaktion zwischen den Reaktanten und Reaktionsprodukten verlaufen in den Verfahrensschritten in der oberen Mischkammer, in der Hochtemperaturzone und in den nachgeschalteten Verfahrenschritten mit unterschiedlichem Schwergewicht und dem erfindungsgemäßen Ergebnis.

Weiterhin wird in den Verfahrensansprüchen beschrieben, auf welche Weise das Zwischenprodukt hergestellt wird. Dies erfolgt bei einer Temperatur über 500 °C unter Zuführung der Mischung und der in den nachgeschalteten Verfahrensschritten hergestellten Gase. In der dritten Merkmalsgruppe ist beschrieben, dass ein Produktstrom aus der oberen Mischkammer, bestehend aus Zwischenprodukt und Eingangsstoff als Produktgemisch zur Hochtemperaturbehandlung in die Hochtemperaturzone eingetragen wird, so dass hier unter den oben genannten Bedingungen die Zwischenproduktherstellung durchgeführt wird. Ferner wird durch die bidirektionale Führung die Nutzung des Zwischenproduktstromes zur Wärme- und Stoffzufuhr realisiert, wodurch ein Prozess mit Wärmezufuhr in der oberen Mischkammer (1. Verfahrensschritt) und eine weitere Vergasung in den nachgeschalteten Verfahrensschritten über den Produktaustritt (C1 und C2) stattfindet.

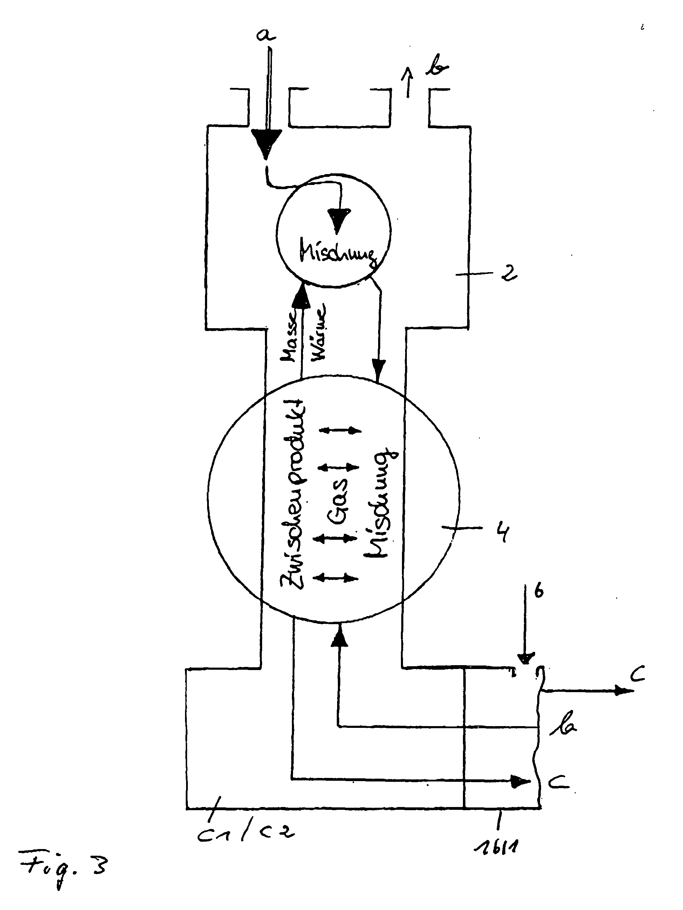

Nachfolgend wird das erfinderische Verfahren anhand eines Ausführungsbeispieles bzw. der Figur 3 für den verfahrensbedingten Ablauf einer Gesamtanlage, insbesondere des erfindungsgemäßen Schwelreaktors, beschrieben:

Das Verfahren gliedert sich in die Stufen, in denen die Einstellung der Eingangsstoffströme, die Reaktion der Stoffstrommischung, die Hochtemperaturvergasung, Niedrigdruckvergasung, Einstellung der Ausgangsstoffströme, die Verstromung sowie die Gastrennung erfolgen. Kennzeichnend für die Reaktionsstufe des Verfahrens ist das Vorhandensein von gasförmigen, flüssigen und festen Stoffströmen, die den erfindungsgemäßen Verfahrensstufen entstammen mit spezifischen Eigenschaften. Die festen Stoffströme unterteilen sich in die Eingangsstoffströme und den Zwischenproduktstoffstrom.

In der Eingangszone wird der erste Eingangsstoffstrom durch Beaufschlagung mit Abgas der Verstromung, welcher eine Temperatur im Bereich von 100 °C bis 700 °C aufweist und im Prinzip drucklos ist, so aufbereitet, dass eine Partikelbildung mit nichtklebender Oberfläche entsteht. Die Partikel haben eine Größe bis maximal 100 mm Kantenlänge. Die Temperatur des ersten Eingangsstoffstromes wird auf bis zu maximal 100 °C angehoben. Der erste Eingangsstoffstrom besteht aus natürlichem und/oder synthetischen zellulosehaltigem Material.

Der zweite Eingangsstoffstrom, der bereits mit dem ersten Eingangsstoffstrom während des Verfahrensschrittes vereinigt werden kann, beinhaltet eine Kunststoffmischung.

Der dritte Eingangsstoffstrom, der ebenfalls zeitig vereinigt werden kann, beinhaltet einen hohen Kohlenstoffanteil.

Die zellulose- und kohlenstoffhaltigen Eingangsstoffströme weisen vor der Einstellung einen Wasseranteil bis maximal 50 % der Gesamtmasse auf. Durch Beaufschlagung mit dem Abgasstrom aus dem Verfahrensschritt Verstromung wird dieser Anteil auf 5 bis 35 % eingestellt. Die eingestellten Eingangsstoffströme enthalten quellfähiges und gequollenes Material und befinden sich in einer Wasserdampfatmosphäre. In diesem Zusammenhang werden sie zur Reaktion gebracht.

Der Zwischenproduktstoffstrom resultiert aus dem Prozess des Hochtemperaturvergasungsschrittes. Dieser Stoffstrom besteht aus 25 % Kohlenstoff (fest) und 55 % Kohlenwasserstoffen, die das Zwölffache an Doppelbindungen enthalten - gegenüber dem Eingangsprodukt. Das Zwischenprodukt weist 5 bis 6 % flüssige Kohlenwasserstoffe mit einem Anteil von 35 % Aromaten auf. Das Verhältnis Wasserstoff zu Kohlenstoff des festen Zwischenproduktes ist 2 : 1.

Die Zuführung des Zwischenproduktes in den Verfahrensschritt Reaktion ist nicht kontinuierlich, sondern erfolgt schubweise mit einer Frequenz von 10 bis 200 Sekunden. Durch die Führung des Stoffstromes aus der Reaktionszone in der Mischkammer in die Hochtemperaturvergasung und aus dieser in die Reaktionszone zurück ist mit dem Aufbau eines Druckes an der Grenze zur Reaktionszone verbunden. Der pulsierend eintretende Zwischenproduktstoffstrom erzeugt damit eine stoßende Schicht in der Feststoffmischung in der Reaktionszone, die die in dieser Zone befindlichen Reaktionspartner in innigen Kontakt bringen und unter der zusätzlichen Wirkung eines Agitators und von Schnecken, die eine Drehzahl von 10 bis 20 Umdrehungen pro Minute aufweisen, und die vorwärts und rückwärts in Drehung versetzt werden, zu einer, aus dem quellfähigen Material dosiert abgegebenen Wasserdampf, mit Zwischenprodukt, Koks und den Komponenten der Eingangsstoffströme in direkten Stoffkontakt bringen. Die Reaktion läuft durch die erfindungsgemäß temperierten Komponenten aus dem Zwischenproduktstrom bei Temperaturen zwischen 450 °C und 750 °C an der Oberfläche der in Kontakt befindlichen Reaktionspartner ab. Die Mischung steht unter der Wirkung des gasförmigen Stoffstromes, der pulsierend aus der Hochtemperaturzone in die Reaktionszone eintritt und eine Temperatur größer 650 °C aufweist, so dass die aus der Reaktionszone und der Hochtemperaturzone entstammenden Gaskomponenten bei Reaktionstemperaturen über 600 °C zur Reaktion gebracht werden. Dabei entsteht ein Gas, das folgende Eigenschaften aufweist:

| | |
|---|---|
| 5 | % Ethan |
| 11 | % Ethylen |
| 28 % | Propan |
| 21 | % Methan und CO |
| 10 | % CO₂ |
| 7 % | Benzen |
| 6 | % höhere Aliphate |
| 12 % | höhere Alkane (flüssig). |

Die Hochtemperaturreaktionszone, in der der Zwischenproduktstrom erzeugt wird, weist eine zylindrische Oberfläche mit einer Temperatur bis 1000 °C auf. An dieser Oberfläche wird durch schneckenartige Rotoren der Zwischenstoffstrom pulsierend verdichtet und in innigen Kontakt mit der Wandzone gebracht, um abwechselnd mit der Kompressionsphase von der Wand gelockert und in die angrenzenden Reaktionszonen gefördert zu werden. Während der Kompressionsphase wird in den Hohlräumen des Zwischenproduktes in der Hochtemperaturreaktionszone und in der nachgeschalteten Niedrigdruckvergasungszone ein Innendruck von ca. 5 kPa aufgebaut.

Die nachgeschaltete Niedrigdruckvergasungszone nimmt ein Zwischenprodukt auf, das anteilig nicht in die Reaktionszone gefördert wurde, sondern aufgrund der entstandenen Partikelgröße kleiner 40 mm Kantenlänge durch Schneckenförderer ausgetragen wurde. Die Niedrigdruckvergasung findet bis maximal 2,5 kPa statt. Der in dieser Zone vorherrschende Druck entsteht durch eine weitere Fortsetzung der Pyrolyse des Zwischenproduktes unter indirekter Wärmezuführung in dieser Zone, die teilweise aus der Anfallwärme der Verstromung gespeist wird. Die aus einer gleichmäßigen Wärmezufuhr resultierende Vergasung des Zwischenproduktes bei einer Temperatur von 600 °C bis 700 °C speist einen Gasraum, der in Verbindung mit der Hochtemperaturzone steht, durch Zuführung von Pyrolyseölen und Stoffen, wie zum Beispiel polyzyklische Kohlenwasserstoffe und aromatische Stoffe in das Zwischenprodukt, wird dieses bei der Temperatur von 600 - 700 °C einer Verkohlung unterzogen, durch Ableitung unter fortschreitender Verkohlung des Produktstromes durch einen linear gestreckten Reaktionsraum mit Fördereinrichtungen wird eine Verweilzeit der im Trägermedium zugeführten Stoffe erreicht, so dass eine Absorption der eingetragenen Stoffe stattfindet. Dabei wird über eine Mündung, welche an den Nachschwelreaktor angeordnet ist, das entsprechende Pyrolyseöl aus aliphatischen Kohlenwasserstoffen und einer Temperatur zwischen 200 bis 600 °C eingegeben, wobei die zyklischen und polyzyklischen Kohlenwasserstoffe (zum Beispiel Xylol, Phenol) bis zu einer Konzentration von 20 Prozent enthalten sind und in den ebenfalls geringen Mengen chlorierte Kohlenwasserstoffe in einem kalkhaltigen Trägermedium eingetragen werden, um dadurch das Zwischenprodukt einer fortschreitenden Verkohlung bei Temperaturen zwischen 400 bis 800 °C zu unterziehen. Der Stoffstrom, der in dem Nachschwelreaktor stattfindet, wird während der fortschreitenden Verkohlung, die an der Mündung hinzugefügten Bestandteile des Pyrolyseöls und die Bestandteile aus dem Trägermedium in einer Zeit von bis zu 5 Sekunden infolge der Temperatur des Trägermediums von ca. 150 °C unverdampft aufnimmt, absorbiert.

Während der Gasstrom sich pulsierend in die vorgeschalteten Verfahrensstufen entspannt, tritt aus der Niedrigdruckreaktionszone der Austragsstoffstrom aus. Das ausgetretene Material dieses Stoffstroms wird in der Aufeinanderfolge mit Heißdampf behandelt und abgesiebt, so dass ein Anteil als Aktivkohle gewonnen wird. Asche und Schlacke sind aus der Aktivkohle in dieser Phase abgeschieden worden.

Das in den Verfahrensstufen Niedrigdruckvergasung, Hochtemperaturreaktionszone und Reaktionszone erzeugte und abgemischte Gas wird in eine Zone zur Einstellung des Produktgasstromes eingeleitet, in der eine Temperatur zwischen 450 °C und 950 °C herrscht. In dieser Zone findet die Einstellung der Gaszusammensetzung in Abhängigkeit von der Temperatur statt. Über einen Bypass wird dazu Gas aus der Niedrigdruckreaktion eingespeist. Mit dieser Temperatur wird das Gas über Aktivkohle geleitet. An diese Verfahrensstufe schließt sich eine konventionelle Gasreinigungsstufe und ein Gaslager an.

Aus dem Gaslager wird das Gas für die Verfahrensschritte Verstromung und Gastrennung bereitgestellt. Die bei der Verstromung entstehende Anfallwärme weist eine Temperatur von 550 °C bis 700 °C auf und dient entsprechend Beschreibung in der Niederdruckreaktionsstufe der Temperierung der Prozesse. Ein Teilstrom wird zur Eingangsprodukteinstellung und Partikelbildung mit einer Temperatur von größer 550 °C abgezweigt und eingesetzt.

Zum Zwecke der Einstellung einer erfindungsgemäßen Gasmischung werden bis maximal 25 % Trockenproduktanteile über eine Sekundäreinspeisung in die Verfahrensstufe Niedrigdruckvergasung mit einer Temperatur von 50 °C bis 90 °C eingespeist.

In der Anlage wird eine Verschwelung von zellulosehaltigen Reststoffen zur Erzeugung von Synthesegasen bzw. zur Energiegewinnung durchgeführt. Die eingesetzten Reststoffe kommen aus dem Recycling. Sie sind dadurch gekennzeichnet, dass eine anderweitige Verwertung ökologisch bzw. ökonomisch nicht sinnvoll durchführbar ist. Der wesentliche Grund hierfür sind der sehr hohe Wasseranteil (z. B. Recyclingrückstände) bzw. die starke Vermischung unterschiedlicher Stoffe. Der hohe Wasseranteil hat zur Folge, dass eine Nutzung durch andere Verfahren auf Grund des hohen energetischen Aufwandes für die Trocknung nicht sinnvoll ist. Ein hoher Grad der Durchmischung unterschiedlicher Substanzen erfordert einen sehr hohen Aufwand bei der Trennung der Stoffe bzw. macht eine solche unmöglich. Die Verschwelung derartiger Reststoffe ermöglicht eine teilweise stoffliche Nutzung (Synthesegase) sowie eine energetische Nutzung. Da die erzeugten Schwelgase in einem geschlossenen Reinigungsprozess von Schadstoffen getrennt werden, kann eine Luftverunreinigung ausgeschlossen werden. Das Kreislaufwasser der Gaswaschanlage kann durch Ausnutzung der im Schwelprozess anfallenden Abwärme angereichert und nachfolgend in Tanks zur Verwertung abgefahren und in einer Kläranlage gereinigt werden. Ölige Bestandteile des Schwelgases werden in einem Koksabsorber gebunden. Je nach Zusammensetzung dieser Bestandteile kann der verunreinigte Koks wieder der Verschwelung zugeführt oder entsorgt werden.

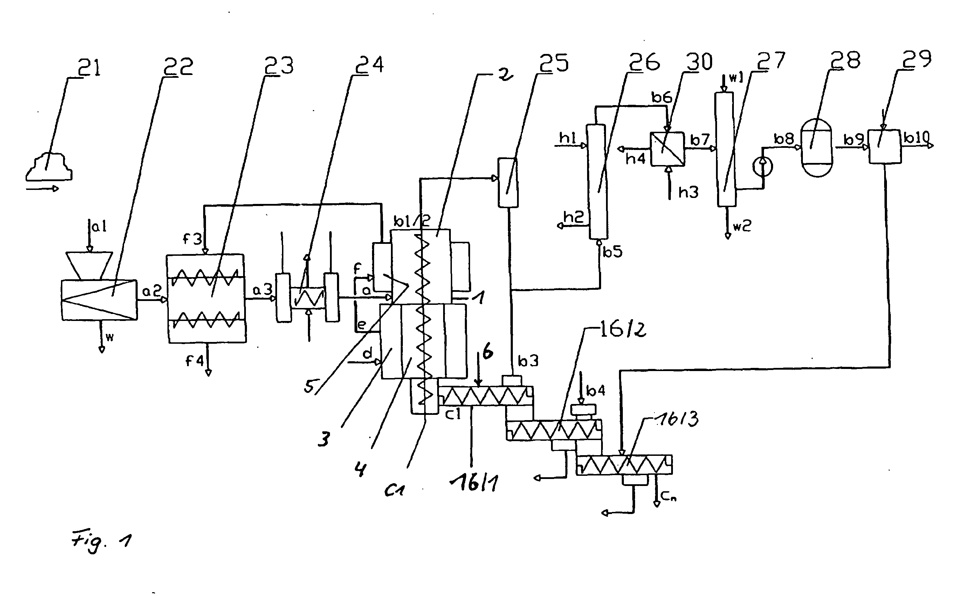

Die gesamte Anlage, z. B. zur Verschwelung von zellulosehaltigen Reststoffen aus dem Papierrecycling, der Land- und der Forstwirtschaft, gliedert sich in folgende Betriebseinheiten, wie in Figur 1 beschrieben. Dabei sind folgende Anlagenkomponenten, wie in der Figur 1 dargestellt, miteinander verknüpft:
Eingangslager (21)
Aufbereitung und Trocknung (22, 23, 24)
Schwelreaktor (1)
Nachschwelreaktoren (16/1; 16/2; 16/3)
Gasreaktor (25)
Gasreinigung, Wasseraufbereitung, Abgasreinigung (26, 30, 27)
Gaslager (28)
Verstromung (29)

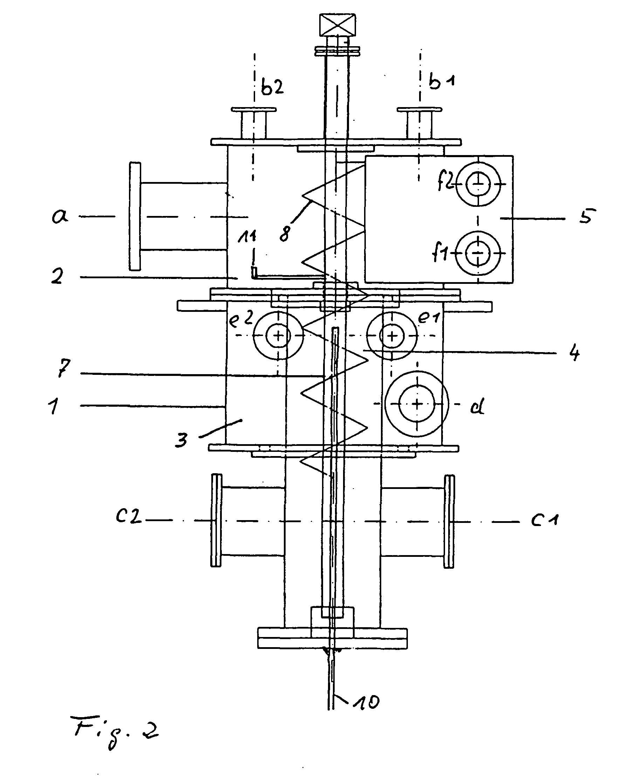

Den Schwelreaktor 1 stellen die Figur 2 und Figur 3 als eine Betriebseinheit dar, in dem die eigentliche Pyrolyse stattfindet. Die einzelnen Reaktoren untergliedern sich in die folgenden Teile:
Mischerkammer 2
Hochtemperaturkammer 4

Diese Teile stehen in einer festen Verbindung und können während des Betriebes nicht getrennt werden. Die Unterteilung dient lediglich der Beschreibung der unterschiedlichen Funktionalität. Durch die beiden Schwelkammern verläuft eine Schnecke 7 mit spezieller Schneckengeometrie.

Das Schwelgut gelangt als Eingangsstoffstrom von den Trocknungsschnecken in die Eintragsschnecke. Von dort wird in die Mischerkammer 2 eingetragen. Die Eintragsschnecke ist eine einfach ausgeführte Trogschnecke, die die Mischerkammer 2 durchdringt. Die Mischerkammer 2 hat ein Fassungsvermögen von 2 m³. Sie wird einerseits durch die Mantelkammer (5) beheizt. Im wesentlichen wird sie aber durch eine Vermischung mit dem Zwischenprodukt und einem Gasaustausch mit der Hochtemperaturkammer 4 temperiert. In der Mischerkammer 2 herrschen Temperaturen von ca. 500 bis 700 °C. Die Mischung aus Eingangsprodukt und Zwischenprodukt wird in der Mischerkammer 2 teilweise verschwelt, teilweise durch die Förderwirkung der Schnecke in die Hochtemperaturkammer 4 eingetragen. In die Mischerkammer 2 strömen die in der Hochtemperaturkammer 4 und den Nachschwelschnecken entstehenden Schwelgase ein. Aus der Mischerkammer 2 gelangen die Schwelgase sowohl über die Gasaustrittsstutzen b1 und b2 als auch absteigend durch die Hochtemperaturzone in die Nachreaktionszone über den Stutzen in die Betriebseinheit Gasreinigung und Gaslagerung.

Die Schwelkammer besteht aus mehreren direkt bzw. indirekt beheizten Kammern, die aus zylindrischen Hohlkörpern bestehen und deren Mittelachse eine Neigung > 60 ° zur Horizontale aufweist, in denen eine reversierende Fördereinrichtung über eine Hohlwelle 7 mit einer Schnecke 8 arbeitet. In der Mischerkammer 2 ist ein Rührarm 11 vorzugsweise angeordnet, um die Mischung herzustellen.

Unterhalb der Mischerkammer 2 befindet sich die Hochtemperaturkammer 4. In dieser Schwelkammer herrscht eine Temperatur von bis zu 1000 °C. Die Verschwelung des eingetragenen Materials wird in diesem Bereich fortgesetzt. Es besteht ein Materialaustausch mit der Mischerkammer 2. Ausgetragen wird das Material über die Austragsschnecke, welche die Hochtemperaturkammer 4 durchdringt, in die Betriebseinheit - Koksaufbereitung, Koksaustrag, Ascheaustrag. Die Hochtemperaturkammer 4 wird von der Ringkammer 3 umgeben. Diese ist mit einer Hitzefest-Auskleidung versehen und dient der Beheizung der Hochtemperaturkammer 4. Die Beheizung erfolgt mittels Gasbrennern über den Brennerstutzen d. Die Befeuerung erfolgt mit dem erzeugten Pyrolysegas. Das Abgas des Gasbrenners, welches über die Abgasstutzen e1, e2 austritt, wird zur Beheizung des Heizmantels der Mischerkammer 2 und der Wasseraufbereitung eingesetzt.

Die Schwelreaktoren verfügen über eine Reihe von Meßsonden, die der Überwachung der Schwelreaktion und der Gewährleistung der Sicherheit der Reaktoren dienen. Die Gasbrenner und das Sicherheitssystem wird über diese Sensoren angesteuert.

Dem Schwelreaktor 1 werden eine Anzahl von Nachschwelreaktoren mit beinhalteten Schnecken nachgeschaltet. Diese Schnecken sind als einfache Schnecken mit Mantelbeheizung ausgeführt. Das bereits stark verschwelte Schwelgut wird aus der Austragsschnecke des Produktaustrittes c1, c2 des Schwelreaktors 1 mit einer Temperatur von mehr als 800 °C in den Nachschwelreaktor 16/1 eingetragen. In den Mantel des Nachschwelreaktors 16/1 wird Brenngas zur Wärmeerzeugung oder Abgas aus der Verstromung bzw. aus den Schwelreaktoren eingetragen und so eine Temperatur von mehr als 500 °C in dem Nachschwelreaktor aufrechterhalten. Dazu ist eine Mündung 6 in dem Nachschwelreaktor 16/1 eingebracht, worin ein Pyrolyseöl aus aliphatischen Kohlenwasserstoffen und einer Temperatur von 200 bis 600 °C eingeleitet wird, wobei die zyklischen und polyzyklischen Kohlenwasserstoffe (z. B. Xylol, Phenol) bis zu einer Konzentration von 20 % enthalten sind und in den ebenfalls geringe Mengen chlorierte Kohlenwasserstoffe in einem kalkhaltigen Trägermedium eingetragen werden, um dadurch das Zwischenprodukt einer fortschreitenden Verkohlung bei Temperaturen zwischen 400 bis 800 °C zu unterziehen.

Somit wird der Schwelprozess über eine Zeitdauer von ca. 60 Minuten weiter aufrechterhalten, und es kommt zu einer vollständigen Verschwelung des Schwelgutes. Als Rückstände der Pyrolyse verbleiben Koks und Asche. Diese werden aus den Nachschwelreaktoren 16/2 und 16/3 in geschlossene Behälter ausgetragen, in denen sie abkühlen. Die Anzahl der baugleichen Nachschwelreaktoren, die erforderlich sind, um eine vollständige Verschwelung des Schwelgutes zu erreichen, ist abhängig vom eingesetzten Ausgangsmaterial. Die Nachschwelreaktoren besitzen Ein- und Austragsschnecken für das Produktgas.

### Bezugszeichen

- 1: Schwelreaktor
- 2: Mischerkammer
- 3: Ringkammer
- 4: Hochtemperaturkammer
- 5: Mantelkammer
- 6: Mündung

- 7: Hohlwelle
- 8: Schnecke

- 10: Luftzuführung
- 11: Rührarm

- 16/1: Nachschwelreaktor
- 16/2: Nachschwelreaktor
- 16/3: Nachschwelreaktor

- 21: Vorratslager
- 22: Aufgabevorrichtung
- 23: Doppelschnecke

- 25: Gasreaktor
- 26: Gaswäsche
- 27: Pufferbehälter
- 28: Gaslagerbehälter
- 29: Gasmotor/Turbine
- 30: Wärmeübertrager

- a: - Produktgemisch-Zuführung
- b1: - Gasaustrittsstutzen
- b2: - Gasaustrittsstutzen
- c1: - Produktaustritt
- c2: - Produktaustritt
- d: - Brennerstutzen
- e1: - Abgasstutzen
- e2: - Abgasstutzen
- f1: - Gasstutzen
- f2: - Gasstutzen

- a1 -: Eingangsprodukt
- a2 -: Eingangsprodukt
- b... -: Gase
- c -: Zwischenprodukt/Produkt
- cₙ -: Zwischenprodukt/Produkt
- e... -: Rauchgase
- f... -: Rauchgase
- h... -: Hilfsmedien
- w... -: Wasser

## Patentansprüche

1. Verfahren zur thermischen Behandlung und chemischen Umsetzung von Natur- und Synthesestoffen unter Zeugung eines Produktgases zur weiteren Verwendung, wobei hohe Temperaturen auf ein Produktgemisch aus Recyclingstoffen und/oder organischen Beimengungen in einem Schwelreaktor (1) wirken und Gase zu einer weiteren Verarbeitung entstehen, **gekennzeichnet dadurch, dass**
a) ein wasserhaltiger Eingangsstoff mit einem vorhandenen Zwischenprodukt eines Zwischenproduktstromes aus der Hochtemperaturkammer (4) des Schwelreaktors (1) gemischt wird und dabei auf eine Temperatur größer 300 °C in der Mischerkammer (2) des Schwelreaktors (1) und zur Zersetzung und Vergasung gebracht wird,
b) ein Zwischenprodukt in Verbindung mit einer zusätzlichen Gaszufuhr bei einer Temperatur von 500 bis 1000 °C in der Hochtemperaturkammer (4) des Schwelreaktors (1) hergestellt wird,
c) ein Produktstrom des Gemisches aus Zwischenprodukt und wasserhaltigem Eingangsstoff bidirektional als Zwischenproduktgemisch zwischen der Hochtemperaturkammer (4) und der Mischerkammer (2) des Schwelreaktors (1) geführt wird, so dass dabei durch eine Hochtemperaturbehandlung in der Hochtemperaturkammer (4) des Schwelreaktors (1) die Zwischenproduktherstellung erfolgt,
d) das daraus entstehende Zwischenprodukt in der Zwischenproduktherstellung bidirektional aufsteigend als Zwischenproduktgemisch der Mischerkammer (2) und im zweiten Stoffstrom absteigend dem Nachschwelreaktor (16/1) zugeführt wird und dabei im Nachschwelreaktor (16/1) über eine Mündung (6) mit einem Pyrolyseöl beaufschlagt wird.

2. Verfahren nach Anspruch 1 **dadurch gekennzeichnet, dass** ein Mischungsverhältnis des Produktgemisches aus Eingangsprodukt und Zwischenprodukt von 1 : 1 bis 1 : 5 eingestellt wird.

3. Verfahren nach Anspruch 1 **dadurch gekennzeichnet, dass** der bidirektionale Zwischenproduktstrom des Zwischenproduktes bzw. der Mischung aus dem Eingangsstoff mit dem Zwischenprodukt mit einer Frequenz von größer 10 Sekunden⁻¹ in seiner Richtung umgekehrt wird.

4. Verfahren nach Anspruch 1 **dadurch gekennzeichnet, dass** das aus anderen Zonen durch das Zwischenprodukt geleitete Gas vorzugsweise CH₄, C₂H₆, C₃H₆, C₃H₈, C₆H₆, CO₂ und Styrol- bzw. Xyloldampf enthält und ferner aus 2 bis 6 % Wasserdampf besteht und die Verweilzeit der Gasmenge mehr als 4 Sekunden beträgt.

5. Verfahren nach Anspruch 1 **dadurch gekennzeichnet, dass** im Zwischenprodukt in den gecrackten Kohlenwasserstoffmolekülen des Zwischenproduktes durch die Stoffstromführung ein Verhältnis Wasserstoff zu Kohlenstoff größer 1,2 bis 1,5 zu 1 eingestellt wird und die Doppelbindungen im Vergleich zum Eingangsprodukt auf mehr als das Dreifache erhöht werden.

6. Verfahren nach Anspruch 1 **dadurch gekennzeichnet, dass** der zweite in bidirektionaler Führung absteigende Zwischenproduktstrom in einen Nachschwelreaktor (16/1) geleitet wird, in dem eine Temperatur größer 450 °C herrscht und in welchem der Zwischenproduktstrom über eine Mündung (6) mit Pyrolyseöl aus aliphatischen Kohlenwasserstoffen mit einer Temperatur von 200 bis 600 °C beaufschlagt wird, welches zyklische und polyzyklische Kohlenwasserstoffe (zum Beispiel Xylol, Phenol) bis zu einer Konzentration von 20 % enthält und in das ferner geringe Mengen chlorierte Kohlenwasserstoffe in einem kalkhaltigen Trägermedium eingetragen werden, um gleichzeitig das Zwischenprodukt einer fortschreitenden Verkohlung bei Temperaturen zwischen 400 bis 800 °C zu unterziehen.

7. Verfahren nach den Ansprüchen 1 und 6 **dadurch gekennzeichnet, dass** der Stoffstrom, der in dem Nachschwelreaktor (16/1) gebildet wird, während der fortschreitenden Verkohlung die an der Mündung (6) hinzugefügten Bestandteile des Pyrolyseöls und die Bestandteile aus dem Trägermedium infolge einer durch das Trägermedium örtlich abgesenkten Temperatur unverdampft aufnimmt und **dadurch** absorbiert.

8. Vorrichtung zur Durchführung des Verfahrens nach den vorstehenden Ansprüchen 1 bis 4, wobei ein Schwelreaktor mit einem Schwelraum und innen liegender Transport- und Mischschnecke vorhanden ist, **dadurch gekennzeichnet, dass**
- ein Schwelreaktor 1, eine obere Mischerkammer (2) aufweist und mit einer Mantelkammer (5) umschlossen ist und weiterhin eine Eingangsstoffzuführung (a) sowie Gasaustrittsstutzen (b1) und (b2) angeordnet sind,
- unterhalb der Mischerkammer (2) eine Hochtemperaturkammer (4) kleineren Querschnittes ausgeführt ist, wobei diese mit einer Ringkammer (3) mit einem Brennstutzen (d) sowie Abgasstutzen (e1) und (e2) umschlossen ist,
- innerhalb der Mischerkammer (2) und der Hochtemperaturkammer (4) eine Hohlwelle (7) mit einer Schnecke (8) vorhanden ist, wobei die Hohlwelle reversierend rotiert und innerhalb der Hohlwelle (7) ein Brenngaseintritt und eine Luftzufuhr (10) bis oberhalb der Ringkammer (3) mit Austrittsöffnungen angeordnet ist,
- unterhalb der Ringkammer (3) ein Produktaustritt (c1), (c2) mit einer innen liegenden Transportschnecke versehen ist.

9. Vorrichtung nach Anspruch 5 **dadurch gekennzeichnet, dass** die Ringkammer (3) die Hochtemperaturkammer (4) und die Mischerkammer (2) als Zylinder ausgestaltet sind und die Mantelkammer (5) die Mischerkammer (2) vorzugsweise umschließt.

10. Vorrichtung nach Anspruch 5 **dadurch gekennzeichnet, dass** die Hohlwelle (7) in der Mischerkammer (2) einen Rührarm (11) vorzugsweise im unteren Drittel der Mischerkammer (2) aufweist.

11. Vorrichtung nach Anspruch 5 **dadurch gekennzeichnet, dass** der gesamte Schwelreaktor (1) eine Neigung > 30 ° zur Horizontale aufweist.

## Claims

1. Method for thermal treatment and chemical transformation of natural and synthetic materials under generation of a product gas for further use, during which process high temperature s are admitted on a product mixture of recycling materials and/or organic admixtures are active in a smouldering reactor (1) and gases are produced for further processing, **characterised in that**
a) a hydrous feedstock is mixed with an existing intermediate product of an intermediate product stream from the high-temperature chamber (4) in the smouldering reactor (1) and in the process is heated to a temperature in excess of 300 °C in the mixing chamber (2) of the smouldering reactor (1) and thus decomposed and gasified,
b) an intermediate product is generated with additional gas supply at a temperature of 500 to 1000 °C in the high-temperature chamber (4) of the smouldering reactor (1),
c) a product stream of the intermediate product-hydrous feedstock mixture is led bidirectionally as intermediate product mixture between the high-temperature chamber (4) and the mixing chamber (2) of the smouldering reactor (1), so that the intermediate product is generated by high-temperature treatment in the high-temperature chamber (4) of the smouldering reactor (1),
d) the resulting intermediate product is charged during intermediate product generated bidirectionally upward as intermediate product mixture to the mixing chamber (2) and in a second material stream downward to the re-smouldering reactor (16/1) and in the process is impinged in the re-smouldering reactor (16/1) through an orifice (6) with a pyrolysis oil.

2. Method according to claim 1 **characterised in that** a mixture ratio of the product mixture of feedstock and intermediate product of 1:1 to 1:5 is adjusted.

3. Method according to claim 1 **characterised in that** the bi-directional intermediate product stream of intermediate product or the mixture of feedstock and intermediate product, respectively, is reversed in its direction with a frequency higher than 10 seconds⁻¹.

4. Method according to claim 1 **characterised in that** gas led from other zones through the intermediate product preferably contains CH₄, C₂H₆, C₃H₆, C₃H₈, C₆H₆, CO₂ and styrene or xylene vapour and additionally consists of 2 to 6 % water vapour and the retention time of the gas quantity is longer than 4 seconds.

5. Method according to claim 1 **characterised in that** the material stream regime in the intermediate product adjusts a hydrogen:carbon ratio higher than 1.2-1.5:1 in cracked hydrocarbon molecules of the intermediate product and double bonds are increased by more than triple compared to feedstock.

6. Method according to claim 1 **characterised in that** the second intermediate product stream guided bidirectionally downward is charged into a re-smouldering reactor (16/1) having a temperature higher than 450 °C and in which pyrolysis oil of aliphatic hydrocarbons with a temperature of 200 to 600 °C is admitted to the intermediate product stream through an orifice (6), which oil contains cyclic and polycyclic hydrocarbons (e.g. xylene , phenol) up to a concentration of 20 % and into which also small quantities of chlorinated hydrocarbons in a lime-containing carrier medium are charged in order to simultaneously subject the intermediate product to advanced carbonisation at temperatures between 400 and 800 °C.

7. Method according to claims 1 and 6 **characterised in that** the material stream, that is formed in the re-smouldering reactor (16/1), takes up and thus absorbs unvaporised constituents of pyrolysis oil added during advanced carbonisation at the orifice (6) and constituents of the carrier medium due to temperature being locally by the carrier medium.

8. Apparatus to execute the method described in the aforementioned claims 1 to 4, with a smouldering reactor with a smouldering compartment and internal transport and mixing worm being provided, **characterised in that**
- a smouldering reactor 1 is fitted with a top mixing chamber (2) and is enclosed by a sheathing chamber (5) and further a feedstock supply (a) and gas outlet nozzles (b1) and (b2) are arranged,
- below the mixing chamber (2) a high-temperature chamber (4) with a smaller cross-section is provided and enclosed with a ring chamber (3) with a burner nozzle (d) as well as exhaust gas nozzles (e1) and (e2),
- the mixing chamber (2) and the high-temperature chamber (4) are fitted with a hollow shaft (7) with a worm, with the hollow shaft rotating reversely and within the hollow shaft (7) a burner gas inlet and an air supply (10) with outlet openings being arranged up to the top of the ring chamber (3),
- a product outlet (c1), (c2) with a interior transport worm is provided below the ring chamber (3).

9. Apparatus according to 5 **characterised in that** the ring chamber (3), high-temperature chamber (4) and mixing chamber (2) being designed as cylinders and the sheathing chamber (5) preferably encloses the mixing chamber (2).

10. Apparatus according to 5 **characterised in that** die hollow shaft (7) in the mixing chamber (2) is fitted with an agitator (11), preferably in the bottom third of the mixing chamber (2).

11. Apparatus according to 5 **characterised in that** the entire smouldering reactor (1) is inclined by > 30° to horizontal.

## Revendications

1. Procédé de traitement thermique et de conversion chimique de substances naturelles et synthétiques en produisant un gaz destiné à être réutilisé, des températures élevées agissant sur un mélange de produit composé de substances recyclées et/ou d'impuretés organiques dans un réacteur de carbonisation (1) en produisant des gaz destinés à être retraités, **caractérisé en ce que**
a) une substance de départ aqueuse est mélangée à un produit intermédiaire disponible dans un courant de produit intermédiaire provenant de la chambre à haute température (4) du réacteur de carbonisation (1) en étant portée à une température supérieure à 300°C dans la chambre du mélangeur (2) du réacteur de carbonisation (1) afin d'être décomposée et transformée en gaz,
b) un produit intermédiaire est fabriqué en amenant en plus du gaz à une température comprise entre 500 et 1 000°C dans la chambre à haute température (4) du réacteur de carbonisation (1),
c) un courant de produit du mélange provenant du produit intermédiaire et de la substance de départ aqueuse est guidé dans deux directions sous forme de mélange de produit intermédiaire entre la chambre à haute température (4) et la chambre du mélangeur (2) du réacteur de carbonisation (4) de sorte à ce que le traitement à haute température dans la chambre à haute température (4) du réacteur de carbonisation (1) génère la fabrication du produit intermédiaire,
d) pendant la fabrication du produit intermédiaire, le produit intermédiaire en résultant est amené en montant dans deux directions à la chambre du mélangeur (2) sous forme de mélange de produit intermédiaire et, en descendant dans le second courant de substance, au réacteur de carbonisation supplémentaire (16/1) en recevant dans le réacteur de carbonisation supplémentaire (16/1) de l'huile de pyrolyse par l'intermédiaire d'un orifice d'introduction(6).

2. Procédé selon la revendication 1, **caractérisé en ce que** le dosage du mélange de produits composé du produit de départ et du produit intermédiaire est compris entre 1:1 et 1:5.

3. Procédé selon la revendication 1, **caractérisé en ce que** le sens du courant bidirectionnel de produit intermédiaire ou de mélange composé de la substance de départ, contenant le produit intermédiaire, est inversé à une fréquence supérieure à 10 secondes⁻¹.

4. Procédé selon la revendication 1, **caractérisé en ce que** le gaz évacué d'autres zones par le produit intermédiaire contient de préférence du CH₄, C₂H₆, C₃H₆, C₃H₈, C₆H₆, CO₂ et des vapeurs de styrène ou de xylène, se compose de plus de 2 à 6 % de vapeur d'eau et le temps de séjour de la quantité de gaz est supérieur à 4 secondes.

5. Procédé selon la revendication 1, **caractérisé en ce qu'**en raison du flux de substances, le rapport d'hydrogène par rapport au carbone est plus que de 1,2-1,5 à 1 dans le produit intermédiaire dans les molécules d'hydrocarbure cassées du produit intermédiaire et, par comparaison au produit de départ, les liaisons doubles sont multipliées au moins par trois.

6. Procédé selon la revendication 1, **caractérisé en ce que** le second courant de produit intermédiaire descendant dans les deux sens est guidé dans un réacteur de carbonisation supplémentaire (16/1) dans lequel il règne une température supérieure à 450°C et dans lequel le courant de produit intermédiaire reçoit à une température comprise entre 200 et 600°C et par l'intermédiaire d'un orifice d'introduction (6) de l'huile de pyrolyse composée d'hydrocarbures aliphatiques, des hydrocarbures cycliques et polycycliques (par exemple xylène, phénol) étant contenus jusqu'à une concentration de 20% et de faibles quantités d'hydrocarbures chlorés étant en outre introduites dans un agent vecteur calcaire afin de soumettre simultanément le produit intermédiaire à une carbonisation avancée à des températures comprises entre 400 et 800°C.

7. Procédé selon les revendications 1 et 6, **caractérisé en ce que** le courant de substances formé dans le réacteur de carbonisation supplémentaire (16/1) recueille, à l'état non évaporé, pendant la carbonisation avancée les composants de l'huile de pyrolyse rajoutés par l'orifice d'introduction (6) et les composants provenant de l'agent vecteur suite à un abaissement local de la température par l'agent vecteur et, ainsi, les absorbe.

8. Dispositif pour la mise en oeuvre du procédé selon les revendications précédentes 1 à 4, présentant un réacteur de carbonisation muni d'une chambre de carbonisation et d'une vis de transport et de mélange se trouvant à l'intérieur, **caractérisé en ce que**
- un réacteur de carbonisation 1 présente une chambre supérieure de mélangeur (2) et est entouré d'une chambre enveloppante (5) et, en outre, une amenée de produit de départ (a) ainsi que des buses de sortie de gaz (b1) et (b2) sont disposées,
- une chambre à haute température (4) de section transversale inférieure est réalisée en dessous de la chambre de mélangeur (2), celle-ci étant entourée d'une chambre annulaire (3) munie d'une buse de combustion (d) ainsi que de buses pour gaz d'échappement (e1) et (e2),
- un arbre creux (7) muni d'une vis sans fin (8) est présent à l'intérieur de la chambre de mélangeur (2) et de la chambre à haute température (4), l'arbre creux tournant en sens inverse et une admission de gaz de combustion et une amenée d'air (10) étant disposées à l'intérieur de l'arbre creux (7) jusqu'au dessus de la chambre annulaire (3) à orifices de sortie,
- une sortie de produit (c1), (c2) munie d'une vis transporteuse se trouvant à l'intérieur est prévue en dessous de la chambre annulaire (3).

9. Dispositif selon la revendication 5, **caractérisé en ce que** la chambre annulaire (3), la chambre à haute température (4) et la chambre de mélangeur (2) sont réalisées sous forme de cylindre et la chambre enveloppante (5) entoure de préférence la chambre de mélangeur (2).

10. Dispositif selon la revendication 5, **caractérisé en ce que** l'arbre creux (7) présente dans la chambre de mélangeur (2) un bras mélangeur (11), de préférence au tiers inférieur de la chambre de mélangeur (2).

11. Dispositif selon la revendication 5, **caractérisé en ce que** l'ensemble du réacteur de carbonisation (1) présente une inclinaison > 30° par rapport à l'horizontale.
